**Europäisches Patentamt**

**European Patent Office**

**Office européen des brevets**

(11) Veröffentlichungsnummer : **0 238 677 B1**

# EUROPÄISCHE PATENTSCHRIFT

(45) Veröffentlichungstag der Patentschrift :
**23.01.91 Patentblatt 91/04**

(51) Int. Cl.$^5$ : **G06F 7/02**

(21) Anmeldenummer : **86103945.1**

(22) Anmeldetag : **22.03.86**

(54) **Schaltungsanordnung zur Koinzidenzüberprüfung eines Datenworts mit einem Referenzdatenwort.**

(43) Veröffentlichungstag der Anmeldung :
**30.09.87 Patentblatt 87/40**

(45) Bekanntmachung des Hinweises auf die
Patenterteilung :
**23.01.91 Patentblatt 91/04**

(84) Benannte Vertragsstaaten :
**DE FR NL**

(56) Entgegenhaltungen :
**DE-B- 1 221 820**
**FR-A- 2 296 966**
**US-A- 3 818 348**
**US-A- 4 153 946**

(73) Patentinhaber : **Deutsche ITT Industries GmbH**
**Hans-Bunte-Strasse 19 Postfach 840**
**D-7800 Freiburg (DE)**

(72) Erfinder : **O'Leary, Paul**
**Schwarzwaldstrasse 24**
**D-7803 Gundelfingen (DE)**
Erfinder : **Orben, Hans-Josef**
**Bergstrasse 7**
**D-7803 Heuweiler (DE)**

Jouve, 18, rue Saint-Denis, 75001 PARIS

## Beschreibung

Die Erfindung betrifft eine Schaltungsanordnung zur Koinzidenzüberprüfung eines Datenworts mit einem Referenzdatenwort mittels je eines EXOR-Gatters pro Stelle der beiden Datenwörter und zur Abgabe eines Koinzidenzsignals, wobei wählbar ist, in wievielen Stellen das Datenwort vom Referenzdatenwort abweichen darf, vgl. den Oberbegriff des Anspruchs 1.

Eine derartige Schaltungsanordnung ist beispielsweise aus US-A 4 153 946 erkennbar. In ihr wird wortweise über arithmetische Schaltungen die Koinzidenzprüfung eines Datenwortes mit einem Referenzdatenwort zur Abgabe eines Koinzidenzsignals ausgeführt, wobei wählbar ist, in wievielen Stellen das Datenwort vom Referenzdatenwort abweichen darf. Für die bitweise Koinzidenzprüfung in den arithmetischen Schaltungen werden beispielsweise EXOR-Gatter angegeben. Als Ergebnis des Vergleichs von Datenwörtern dient eine aus den Ausgangssignalen der einzelnen arithmetischen Schaltungen (= Vergleichsschaltungen) gebildete Spannungssumme, deren Wert mit einem einstellbaren Spannungsreferenzwert verglichen wird.

Aus US-A 3 818 348 ist eine andere Schaltungsanordnung bekannt, die bei Satelliten-Kommunikationssystemen eine Wortkoinzidenz feststellt, auch wenn diese gestört ist, wobei die Koinzidenzprüfung über eine gewichtete Summation der einzelnen Bitkoinzidenzen bestimmt wird. Die Summation erfolgt bei dieser Schaltungsanordnung über Ströme, die von den einzelnen Bit-Vergleichsstufen jeweils als Ausgangssignal erzeugt werden. Die Stromsumme wird mit einem Referenzstrom mit einstellbaren Pegel verglichen. Über den einstellbaren Pegel kann die zulässige Wortkoinzidenz, bzw. die Anzahl der noch zulässigen fehlerhaften Stellen, festgelegt werden.

Es ist daher Aufgabe der Erfindung, eine Schaltungsanordnung der im Oberbegriff des Anspruchs 1 angegebenen Art anzugeben, bei der eine akzeptierbare Abweichung des zu überprüfenden Datenworts vom Referenzdatenwort vorgegeben werden kann, bei der ferner die Schaltungsanordnung mit möglichst wenig Aufwand an Kristallfläche monolithisch integrierbar ist und schließlich eine hohe Arbeitsgeschwindigkeit aufweist.

Die Erfindung wird nun anhand der Figuren der Zeichnung näher erläutert.

Fig.1 zeigt schematisch und teilweise in Form eines Blockschaltbilds das der Erfindung zugrundeliegende Prinzip, und

Fig.2 zeigt das schematisierte Schaltbild eines bevorzugten Ausführungsbeispiels der Erfindung.

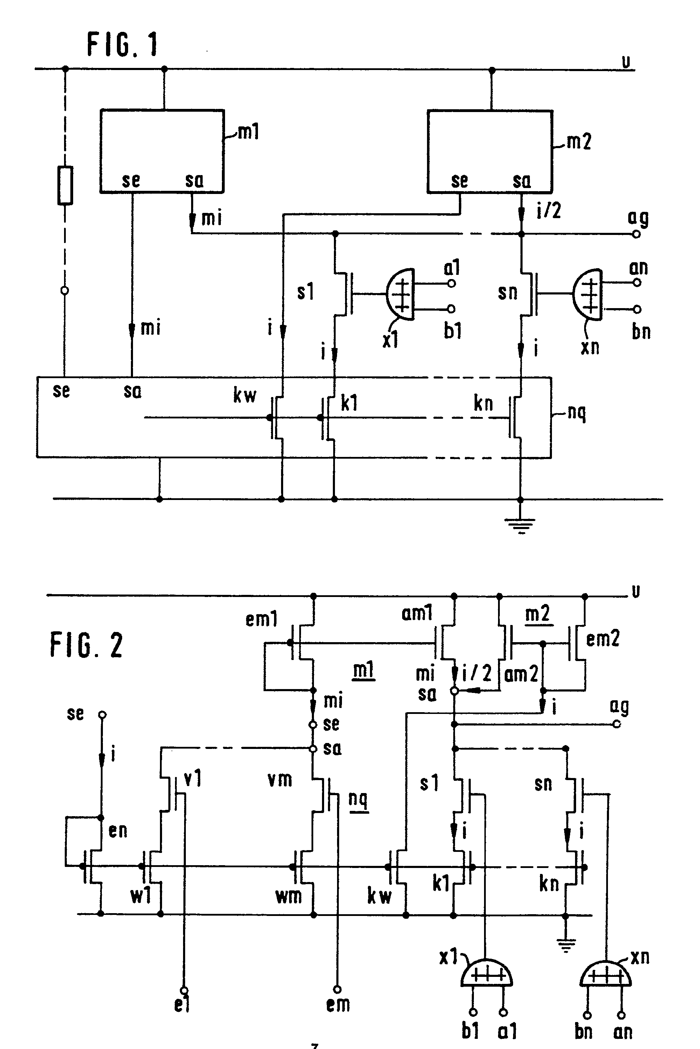

Für die Figurenbeschreibung ist vorausgesetzt, daß das Datenwort und das Referenzdatenwort jeweils n-stellig sind und daß davon m Stellen fehlerbehaftet sein dürfen. Von den somit n Stufen der Schaltungsanordnung sind in Fig.1 die erste und die letzte mit dem Bezugszeichenindex 1 bzw. n gezeigt. Die Schaltung ist in komplementärer Technik realisiert, d.h. mit bipolaren PNP- und NPN-Transistoren oder bevorzugt in komplementärer Isolierschicht-Feldeffekttransistor-Technik, also in der sogenannten CMOS-Technik.

Das zu überprüfende Datenwort a1..an liegt Stelle für Stelle am ersten Eingang der EXOR-Gatter x1..xn, deren jeweiligem zweiten Eingangs das Referenzdatenwort b1...bn zugeführt ist. Der Ausgang jedes EXOR-Gatters x1...xn liegt am Gate des jeweiligen Schaltertransistors s1...sn. Das eine Ende von dessen Source-Drain-Strecke liegt über den N-Konstantstromtransistor k1...kn am Schaltungsnullpunkt und das andere Ende dieser Source-Drain-Strecke am Ausgang ag der Schaltungsanordnung. Bei Stellengleichheit von Datenwort und Referenzdatenwort wird der zugehörige Schaltertransistor vom Ausgangssignal des zugehörigen EXOR-Gatters im Falle der hier vorausgesetzten positiven Logik leitend gesteuert. Ebenfalls am Ausgang ag liegt der jeweilige Stromausgang sa des ersten P-Stromspiegels m1 und des zweiten P-Stromspiegels m2. (Es sei angemerkt, daß mit dem Suffix "P-" PNP-Transistoren oder P-Kanal-Transistoren, mit "N-" dagegen NPN- bzw. N-Kanal-Transistoren bezeichnet sein sollen).

Die N-Konstantstromtransistoren k1..kn sind so dimensioniert, daß jeder von ihnen den Einheitstrom i führen kann. Ferner sind sie Bestandteil der N-Mehrfach-Stromquelle nq, deren Stromausgang sa mit dem Stromeingang se des ersten P-Stromspiegels m1 verbunden ist. Dieser Stromausgang führt ein solches Vielfaches mi des Einheitsstroms i, wie der Anzahl m der Stellen entspricht, in denen das Datenwort a1..an vom Referenzdatenwort b1..bn abweichen darf, d.h. er führt das m-fache des Einheitsstroms i. Der Stromausgang sa des zweiten P-Stromspiegels m2 führt den halben Einheitsstrom i/2, während sein Stromeingang se am Ausgang des weiteren, den Einheitsstrom i führenden N-Konstantstromtransistors kw der N-Mehrfach-Stromquelle nq angeschlossen ist.

Durch Einprägung eines entsprechend geeigneten Eingangsstroms am Stromeingang se der N-Mehrfach-Stromquelle nq sind die eben erwähnten Eingangsströme einzustellen. Dies kann beispielsweise dadurch geschehen, daß der Stromeingang se der N-Mehrfach-Stromquelle nq über einen Widerstand, wie dies in Fig.1 gestrichelt angedeutet ist, mit der Betriebsspannungsquelle u verbunden ist. Der jeweilige Widerstandswert hängt dabei von der Stärke des Einheitsstroms i und der Dimensionierung des zugehörigen Eingangstransistors in bekannter Weise ab.

Die Fig.2 zeigt ein bevorzugtes Ausführungsbeispiel der Anordnung nach Fig.1, das in CMOS-Technik realisiert ist. Die N-Mehrfach-Stromquelle nq enthält den Eingangstransistor en, dessen Gate mit dem schaltungsnullpunktabgewandten Ende seiner Source-Drain-Strecke, also mit dem Stromeingang se, verbunden ist. Ferner sind m weitere Konstantstromtransistoren w1..wm vorgesehen, deren eines Ende ihrer Source-Drain-Strecken ebenso wie bei den N-Konstantstromtransistoren k1..kn mit dem Schaltungsnullpunkt verbunden ist. Das andere Ende dieser Source-Drain-Strecken liegt jeweils über die Source-Drain-Strecke eines weiteren Schaltertransistors v1..vm am Stromausgang sa der N-Mehrfach-Stromquelle nq und somit am Stromeingang des ersten P-Stromspiegels m1. Dem jeweiligen Gate der weiteren Konstantstromtransistoren w1..wm ist die entsprechende Stelle des Einstellsignals e1..em zugeführt, von denen dadurch so viele leitend zu steuern sind, in wievielen der m Stellen das Datenwort a1..an vom Referenzdatenwort b1..bn abweichen darf.

Das Gate des Eingangstransistors em1 des ersten P-Stromspiegels m1 ist mit dem betriebsspannungsquellenabgewanden Pol seiner Source-Drain-Strecke und mit dem Gate des Ausgangstransistors am1 des ersten P-Stromspiegels m1 verbunden und liegt am Stromeingang se. Dessen Source-Drain-Strecke liegt mit ihrem einen Ende an der Betriebsspannungsquelle u und mit ihrem anderen Ende am Stromausgang sa, der auch der Stromausgang sa des zweiten P-Stromspiegels m2 ist und an dem das eine Ende der Source-Drain-Strecke des Ausgangstransistors am2 dieses Stromspiegels m2 angeschlossen ist. Das Gate von dessen Eingangstransistor em2 ist mit dem betriebsspannungsquellenabgewandten Ende seiner Source-Drain-Strecke und mit dem Gate des Ausgangstransistors am2 verbunden und bildet den Stromeingang se dieses Stromspiegels m2, der mit dem Stromeingang se der N-Mehrfach-Stromquelle nq verbunden ist.

Im Ausführungsbeispiel der Fig.2 ist jedem der beiden zuletzt genannten Stromeingange se der Referenzstrom i einzuprägen, was wiederum beispielsweise durch einen entsprechend dimensionierten Widerstand geschehen kann.

Mittels der beiden Stromspiegel und der Mehrfach-Stromquelle läßt sich eine aufwendige Addierschaltung an den Ausgängen der EXOR-Gatter x1..xn vermeiden, mit der die Anzahl der Übereinstimmungen in den einzelnen Stellen des Datenworts und des Referenzdatenworts an sich festzustellen wäre. In Abhängigkeit davon, ob die Anzahl m der zugelassenen fehlerhaften Stellen auftritt, fließt über den Ausgang ag der Schaltungsanordnung ein positiver oder negativer Strom. Diese Stromrichtungsabhängigkeit ist ein Binärsignal, das in einer entsprechenden Schaltung weiterverarbeitet werden kann.

Zur Veranschaulichung dieses Sachverhalts sei angenommen, daß m = 2 ist, d.h. daß zum Ausgang ag vom ersten P-Stromspiegel m1 her der Strom 2i fließt. Sind nun beispielsweise drei der n Schaltertransistoren s1..sn von den EXOR-Gattern x1..xn leitend gesteuert, weil in drei Stellen keine Gleichheit vorliegt, so fließt vom Ausgang ag andererseits das Dreifache 3i des Einheitsstroms i ab, so daß sich als Gesamtstromsumme dieses Knotens der Wert -i/2 ergibt. Sind dagegen nur zwei der Schaltertransistoren s1..sn leitend gesteuert, weil nur zwei Stellen nicht übereinstimmen, so ist die Stromsumme für den Knoten des Ausgangs ag +i/2. Der Vorzeichenwechsel der Stromsumme am Ausgang ag ist also, wie bereits erwähnt, ein Digitalsignal für die Koinzidenz bei dem gewählten zugelassenen Übereinstimmungsfehler.

Da bei der Erfindung der erwähnte, am Ausgang der EXOR-Gatter x1..xn an sich erforderliche Addierer durch die erläuterte Stromspiegel- und -quellenanordnung ersetzt ist, ist die Verarbeitungsgeschwindigkeit im wesentlichen nur von technologischen Parametern des zur Realisierung der integrierten Schaltung verwendeten Prozesses, also beispielsweise von den Parametern des verwendeten CMOS-Prozesses abhängig.

Für den Fall, daß das zu überprüfende Datenwort nicht in paralleler Form angeboten wird, ist eine Serien/Parallelwandlung erforderlich, die zweckmäßigerweise mittels eines Schieberegisters vorgenommen wird, über dessen Serieneingang die seriellen Daten eingelesen werden und dessen Parallelausgänge mit dem jeweiligen Eingang der EXOR-Gatter x1..xn für die jeweilige Stelle des Datenworts verbunden sind.

## Ansprüche

1. Schaltungsanordnung zur Koinzidenzüberprüfung eines Datenworts (a1..an) mit einem Referenzdatenwort (b1..bn) mittels je eines EXOR-Gatters (x1..xn) pro Stelle der beiden Datenwörter und zur Abgabe eines Koinzidenzsignals, wobei wählbar ist, in wievielen Stellen (m) das Datenwort vom Referenzdatenwort abweichen darf,
gekennzeichnet durch folgende Merkmale :
- die Schaltung ist in integrierter komplementärer Technik realisiert,

– der Ausgang jedes EXOR-Gatters (x1..xn) liegt am Gate eines Schaltertransistors (s1..sn),
– das eine Ende von dessen Source-Drain-Strecke liegt über einen N-Konstantstromtransistor (k1..kn) am Schaltungsnullpunkt und deren anderes Ende am Ausgang (ag) der Schaltungsanordnung,
– der jeweilige Stromausgang (sa) eines ersten und eines zweiten P-Stromspiegels (m1,m2) liegen ebenfalls am Ausgang (ag) der Schaltungsanordnung,
– die untereinander zur jeweiligen Führung eines Einheitsstroms (i) dimensionierten N-Konstantstrom-Transistoren (k1..kn) sind Bestandteile einer N-Mehrfach-Stromquelle (nq), deren Stromausgang (sa) mit dem Stromeingang (se) des ersten P-Stromspiegels (m1) verbunden ist und ein solches Vielfaches (mi) des Einheitstromes (i) führt, wie der Anzahl (m) der Stellen entspricht, in denen das Datenwort (a1 .. an) vom Referenzdatenwort (b1 ... bn) abweichen darf,
– der Stromeingang des zweiten P-Stromspiegels (m2) liegt am Ausgang eines weiteren den Einheitsstrom (i) führenden N-Konstantstromtransistors (kw) der N-Mehrfach-Stromquelle (nq),
– der Stromausgang (sa) des zweiten P-Stromspiegels (m2) führt den halben Einheitsstrom (i/2), und
– ein Ausgangsknoten (ag) an welchem die Stromsumme

$$\sum_I = (m - \ell + \tfrac{1}{2})i$$

ist, wobei I die Anzahl der Stellen angibt, in denen das Datenwort vom Referenzdatenwort tatsächlich abweicht, so daß das Vorzeichen der Stromsumme ein Digitalsignal für die Koinzidenz bei dem gewählten zugelassenen Übereinstimmungsfehler darstellt.

2. Schaltungsanordnung nach Anspruch 1, dadurch gekennzeichnet, daß die N-Mehrfach-Stromquelle (nq) m zusätzliche, zur jeweiligen Führung des Einheitsstroms (i) dimensionierte N-Konstantstrom-Transistoren (w1..wm) enthält, deren jeweiliger Stromausgang über je einen weiteren Schaltertransistor (v1..vm) am Stromeingang (se) des ersten P-Stromspiegels (m1) angeschlossen ist und von denen durch Anlegen der jeweiligen Stelle eines Einschaltsignals (e1..em) an das jeweilige Gate so viele leitend gesteuert sind, in wievielen Stellen (m) das Datenwort vom Referenzdatenwort abweichen darf.

3. Schaltungsanordnung nach Anspruch 1 oder 2, dadurch gekennzeichnet, daß sie in komplementärer Isolierschicht-Feldeffekttransistor-Technik realisiert ist.

4. Schaltungsanordnung nach einem der Ansprüche 1 bis 3 für ein zeitlich seriell auftretendes, zu überprüfendes Datenwort (a1..an), dadurch gekennzeichnet, daß es in ein Schieberegister seriell eingelesen wird, dessen Stufenausgänge jeweils mit einem Eingang eines der EXOR-Gatter (x1..xn) verbunden sind.

## Claims

1. Circuit arrangement for checking the coincidence of a data word (a1 ... an) with a reference data word (b1 ... bn) by means of a EXOR gate (x1 ... xn) per bit of the two data words and for delivering a coincidence signal, it being possible to select in how many bits (m) the data word is permitted to deviate from the reference data word,
characterized by the following features :
– The circuit is implemented in integrated complementary technology ;
– the output of each EXOR gate (x1 ... xn) is coupled to the gate of a switching transistor (s1 ... sn) ;
– one end of the source-drain path of said switching transistor (s1 ... sn) is grounded through an N constantcurrent transistor (k1 ... kn), and the other end is connected to the output (ag) of the circuit arrangement ;
– the current output (sa) of a first P current mirror (m1) and the current output (sa) of a second P current mirror (m2) are also connected to the output (ag) of the circuit arrangement ;
– the N constant-current transistors (k1 ... kn), which are each designed to carry a unit current (i), form part of an N multiple current source (nq) whose current output (sa) is connected to the current input (se) of the first P current mirror (m1) and carries a multiple (mi) of the unit current (i) equal to the number (m) of bits in which the data word (a1 ... an) is permitted to deviate from the reference data word (b1 ... bn) ;
– the current input of the second P current mirror (m2) is connected to the output of an additional N constantcurrent transistor (kw) forming part of the N multiple current source (nq) and carrying the unit current (i) ;
the current output (sa) of the second P current mirror (m2) carries half the unit current (i/2), and

– an output node (ag) at which the current sum is

$$\sum_{I} = (m - \tfrac{1}{2} + \tfrac{1}{2})i$$

where I is the number of bits in which the data word actually deviates from the reference data word, so that the sign of the current sum represents a digital signal for the coincidence at the selected permissible deviation.

2. A circuit arrangement as claimed in claim 1, characterized in that the N multiple current source (nq) includes m additional N constant-current transistors (w1 ... wm) each of which is designed to carry a unit current (i) and has its current output connected via an additional switching transistor (v1 ... vm) to the current input (se) of the first P current mirror (m1), and of which a number equal to the number of bits (m) in which the data word is permitted to deviate from the reference data word are turned on by applying the respective bit of a turn-on signal (e1 ... em).

3. A circuit arrangement as claimed in claim 1 or 2, characterized in that it is implemented in complementary insulated-gate field-effect transistor technology.

4. A circuit arrangement as claimed in any one of claims 1 to 3 for a data word to be checked (a1 ... an) which occurs serially in time, characterized in that said data word (a1 ... an) is written serially into a shift register having each of its stage outputs connected to one input of one of said EXOR gates (x1 ... xn).

## Revendications

1. Montage de contrôle de la coïncidence entre un mot de donnée (a1...an) et un mot de donnée de référence (b1...bn) à l'aide d'une porte OU-Exclusif respective (x1 ...xn) prévue pour chaque élément des deux mots de données, et pour délivrer un signal de coïncidence, auquel cas il est possible de choisir le nombre d'éléments (m), au niveau desquels le mot de donnée peut différer du mot de donnée de référence, caractérisé par les caractéristiques suivantes

– le circuit est réalisé selon la technique complémentaire intégrée,
– la sortie de chaque porte OU-Exclusif (x1...xn) est raccordée à la grille d'un transistor formant interrupteur (s1...sn),
– une extrémité de la voie source-drain de ce transistor est raccordée, par l'intermédiaire d'un transistor à courant constant de type N (k1...kn), au neutre du circuit, tandis que l'autre extrémité est raccordée à la sortie (ag) du montage,
– les sorties de courant respectives (sa) d'un premier et d'un second miroirs de courant de type P (m1,m2) sont également raccordées à la sortie (ag) du montage,
– les transistors à courant constant de type N (k1...kn), dimensionnés les uns par rapport aux autres de manière à véhiculer respectivement un courant unité (i), font partie d'une source de courant multiple de type N (nq), dont la sortie de courant (sa) est reliée à l'entrée de courant (se) du premier miroir de courant de type P (m1) et transfère un multiple (mi) du courant unité (i), qui correspond au nombre (m) des éléments dans lesquels le mot de donnée (a1...an) peut différer du mot de donnée de référence (b1...bn),
– l'entrée de courant du second miroir de courant de type P (m2) est raccordée à la sortie d'un autre transistor à courant constant de type N (kw), qui véhicule le courant unité (i), de la source de courant multiple de type N (nq),
– la sortie de courant (sa) du second miroir de courant de type (m2) véhicule la moitié (i/2) du courant unité, et
– un noeud de sortie (ag), sur lequel est présente la somme de courants

$$\Sigma_I = (m - 1 + \tfrac{1}{2})i$$

1 indiquant le nombre des éléments au niveau desquels le mot de donnée diffère effectivement du mot de donnée de référence, de sorte que le signe de la somme de courants représente un signal numérique pour la coïncidence dans le cas de l'erreur de coïncidence autorisée choisie.

2. Montage suivant la revendication 1, caractérisé par le fait que la source de courant multiple de type N (nq) contient m transistors supplémentaires à courant constant de type N (w1...wm), qui sont dimensionnés pour transmettre respectivement le courant unité (i) et dont la sortie de courant respective est raccordée par l'intermédiaire d'un autre transistor respectif (v1...vm), à l'entrée de courant (se) du premier miroir de courant de type P (m1) et parmi lesquels autant de transistors qu'il existe d'emplacements (m), où le mot de donnée peut différer du mot de donnée de référence, sont placés à l'état conducteur sous l'effet de l'application de l'élément respectif d'un signal de déclenchement (e1...em) à la grille respective.

3. Montage selon la revendication 1 ou 2, caractérisé en ce qu'il est réalisé selon la technique complémentaire à transistors à effet de champ à couche isolante.

4. Montage selon l'une des revendications 1 à 3 pour un mot de donnée (a1...an) devant être contrôlé, qui apparaît en série dans le temps, caractérisé en ce qu'il est introduit en série dans un registre à décalage, dont les sorties des étages sont reliées respectivement à une entrée de l'une des portes OU-Exclusif (x1...xn).

FIG. 1

FIG. 2

7